# EUROPÄISCHE PATENTSCHRIFT

(11) **EP 2 944 553 B1**
(45) Veröffentlichungstag und Bekanntmachung des Hinweises auf die Patenterteilung: **11.03.2020**
(21) Anmeldenummer: 15165873.9
(22) Anmeldetag: 30.04.2015
(51) Int. Cl.: B62D 55/28, B62D 55/20

(54) **RAUPENSTEG**
CRAWLER BAR
CRAMPON

(30) Priorität: 12.05.2014 DE 202014102210 U
(43) Veröffentlichungstag der Anmeldung: 18.11.2015
(73) Patentinhaber: Hans Hall GmbH, 88250 Weingarten (DE)
(72) Erfinder: Hall, Hans, 88250 Weingarten (DE)
(74) Vertreter: Otten, Roth, Dobler & Partner mbB Patentanwälte

(56) Entgegenhaltungen:
- WO-A1-2011/127554
- AT-U1- 5 902
- US-A- 3 703 321
- US-A- 3 944 006
- US-A- 5 713 645
- US-A- 5 921 642
- US-B1- 6 264 294

## Beschreibung

Die Erfindung betrifft einen Raupensteg für eine Raupenkette eines Kettenfahrzeuges nach dem Oberbegriff des Anspruchs 1.

Aus dem Stand der Technik sind Raupenstege für Kettenfahrzeuge in verschiedensten Ausführungen bekannt, z.B. aus der US 3,944,006. Dabei sind die Raupenstege dazu vorgesehen, mit einem oder vorzugsweise mehreren Laufbändern verbunden zu werden, wobei die Raupenstege quer, insbesondere senkrecht zur Laufrichtung der Laufbänder angeordnet sind. Die Laufrichtung der Laufbänder ist dabei regelmäßig parallel zu geraden Fahrrichtungen eines Kettenfahrzeugs ausgerichtet. Vorzugsweise werden dabei vergleichsweise lange Raupenstege eingesetzt, um die Last eines Kettenfahrzeuges über einen Teil, insbesondere über einen Großteil einer Spurbreite einer Raupenkette eines Kettenfahrzeugs zu verteilen.

Beispielsweise bei Kettenfahrzeugen für winterlichen Einsatz, wie z.B. Pistenpräparationsfahrzeugen, werden die Raupenstege an einer Raupenkette häufig in einem vergleichsweise kleinen Abstand nacheinander entlang von einem oder mehreren Laufbänder in deren Laufrichtung angeordnet und sind dabei vorzugsweise als Kettenstege, insbesondere Eingriffsstege der Raupenkette vorgesehen, in die ein Antriebsrad des Kettenfahrzeugs eingreifen kann.

Um eine sichere Führung der Raupenkette an einem Fahrwerk des Fahrkettenfahrzeugs zu gewährleisten, kann eine Raupenkette an einer dem Fahrwerk zugewandten Seite, d.h. an einer Fahrwerksseite der Raupenkette bekanntlich Führungselemente aufweisen, die z.B. am Raupensteg oder an einem Laufband angebracht sind. Mit den Führungselementen ist meist eine Führungsspur an der Fahrwerksseite der Raupenkette vorgegeben, wobei die Führungselemente Fahrwerksteile wie z.B. ein Antriebsrad, z.B. eine Laufrolle und z.B. eine Kufe in einem Bereich der Führungsspur in Eingriff mit der Raupenkette halten und in Laufrichtung der Raupenkette an deren Fahrwerksseite entlangbewegen lassen. Dabei stellen die Führungselemente der Raupenkette sicher, dass Querkräfte beim Fahrbetrieb, die z.B. bei Kurvenfahrten oder bei Wendemanövern auftreten, Vom Fahrwerk auf einen Untergrund übertragbar sind und dabei die Raupenkette eine vorgesehene Anordnung zum Fahrwerk zuverlässig beibehält. Beispielsweise sind Führungselemente in Form eines Spurbügels bekannt, der sich z.B. am Raupensteg anbringen lässt, wobei an z.B. entgegengesetzten Enden eines Mittelstücks horn- bzw. höckerförmige Vorsprünge zum Fahrwerk hin aufragen. Die Raupenstege sind an der Raupenkette meist so angeordnet, dass die Spurbügel in Laufrichtung aufeinander folgen und zwischen den Vorsprüngen z.B. eine durchgehende Spurrinne bilden, in die z.B. ein Antriebsrad und z.B. eine Laufrolle des Fahrwerks eingreifen kann.

An der dem Fahrwerk abgewandten Seite, d.h. an der Bodenkontaktseite der Raupenkette sind Raupenstege üblicherweise mit Tritt- und gegebenenfalls Eingreifmitteln ausgestattet, um durch flächige Auflage und wahlweise auch durch eingreifende Vorsprünge auf einem befahrenen Untergrund eine wirkungsvolle Traktion gewährleisten. Die Bodenhaftung der Raupenkette und insbesondere der Raupenstege dient neben der Übertragung von Beschleunigungs- und Bremskräften auch der Übertragung seitwärts gerichteter Kräfte, die z.B. während Richtungsänderungen bei Kurvenfahrten oder z.B. bei einer Fahrt quer zur Gefällerichtung eines Abhangs auftreten.

Der vorliegenden Erfindung liegt die Aufgabe zu Grunde, einen Raupensteg bereitzustellen, der hinsichtlich Verschleiß und Wartung verbessert ist.

Die Aufgabe wird mit einem Raupensteg mit den Merkmalen des Anspruchs 1 gelöst.

Vorteilhafte und bevorzugte Ausführungen der Erfindung sind in den abhängigen Ansprüchen aufgeführt.

Die Erfindung geht von einem Raupensteg für eine Raupenkette eines Kettenfahrzeuges, insbesondere eines Schneefahrzeuges, aus, wobei der Raupensteg eine Basisschiene, die lösbar an der Raupenkette anbringbar ist, einen Spurbügel, der zur Führung der Raupenkette an einem Fahrwerk des Kettenfahrzeugs vorgesehen ist, und ein Trittelement, dass zur Anordnung an einer Bodenkontaktseite der Raupenkette und zum Eingriff in einem Fahruntergrund vorgesehen ist, umfasst. Der Kern der Erfindung besteht darin, dass der Spurbügel und das Trittelement einstückig ausgebildet sind, wobei das Trittelement über einen Großteil einer Länge in Längsrichtung der Basisschiene erstreckt ist. Dadurch sind Querkräfte, die bei einer Fahrt z.B. durch eine Richtungsänderung bei einer Kurvenfahrt oder z.B. bei einer Fahrt quer zur Gefällerichtung eines Abhangs auftreten, vorteilhaft unmittelbar vom Spurbügel auf das Trittelement übertragbar, wodurch sich z.B. ein Verschleiß an Befestigungsmitteln für ein Trittelement und einen Spurbügel vermeiden lassen, die beispielsweise separat an der Basisschiene angebracht sind.

Die Anforderungen an einen Spurbügel, der einem Fahrwerk einen zuverlässigen zeitlichen Halt bieten kann, unterscheiden sich je nach einem Untergrund, auf den ein Trittelement vorzugsweise abgestimmt ist. Ein erfindungsgemäßer Raupensteg bietet den Vorteil, dass durch einstückige Ausbildung von Spurbügel und Trittelement gewährleistet ist, dass mit dem Trittelement zugleich ein Spurbügel montiert ist, der beispielsweise auf die gleichen Querkräfte wie das Trittelement abgestimmt ist, die für einen vorgesehenen Einsatz charakteristisch sind. Die Basisschiene kann dabei für eine gleichmäßige Verteilung einer am Spurbügel übertragenen Gewichtskraft sowie von Antriebskräften beim Fahren, Beschleunigen und Bremsen abgestimmt sein. Durch eine zumindest teilweise Aufteilung der Kraftübertragungen senkrecht und längs der Laufrichtung auf den einstückig mit dem Trittelement verbundenen Spurbügel und die Basisschiene lassen sich die entsprechenden Teile vergleichsweise besser auf die damit verbundenen Belastungen abstimmen.

Durch die einstückige Ausbildung von Trittelement und Spurbügel können diese als eine Einheit mit verschiedenen Ausführungen einer Basisschiene, z.B. als Vollprofilschiene oder z.B. als Hohlprofilschiene, für einen Aufbau eines Raupenstegs kombinierbar sein. Dadurch lässt sich ein Raupensteg hinsichtlich z.B. eines Gewichts und z.B. einer Steifigkeit unterschiedlich zusammenbauen.

Eine bevorzugte Ausführung der Erfindung sieht vor, dass der Spurbügel und das Trittelement an der Basisschiene angegossen sind. Dabei können der Spurbügel und das Trittelement beispielsweise durch Vulkanisation aus einer Gummimischung an die Basisschiene angegossen sein. Dadurch lässt sich eine vergleichsweise starke Materialverbindung einer zum Beispiel metallischen Basisschiene mit dem Material des Spurbügels und des Trittelements erreichen, die eine vorteilhaft hohe Festigkeit und Haltbarkeit des Raupenstegs gewährleisten. Dadurch lässt sich vorteilhaft Verschleiß zwischen dem Trittelement bzw. dem Spurbügel und der Basisschiene vermeiden. Des Weiteren kann eine z.B. metallische Basisschiene bei einem Angießen des Trittelements und des Spurbügels teilweise oder vollständig von einer z.B. Kunststoffschicht umschlossen sein, um einen erhöhten Korrosionsschutz zu erreichen.

Für eine relativ gute Bodenhaftung sowie zur Verringerung von Fahrgeräuschen sind der Spurbügel und das Trittelement aus einem elastischen nachgiebigen Material, insbesondere einem gummihaltigen Material hergestellt. Dabei bietet ein gummielastisches Material auch auf vergleichsweise glatten Oberflächen, z.B. glattgeschliffenen Stein- bzw. Betonflächen eine relativ hohe Bodenhaftung.

Für den Spurbügel und das Trittelement können weitere Materialien wie zum Beispiel Kunststoffe oder auch silikonbasierende elastische Materialien - einzeln oder in Kombination miteinander - eingesetzt werden. Zum Beispiel kann durch einen stufenweisen Herstellungsprozess der Spurbügel aus einem anderen Material bestehend angegossen sein als das Trittelement. Mit einem Trittelement aus einem elastischen nachgiebigen Material können insbesondere befestigte Fahrwege geschont werden. Der Spurbügel aus einem elastischen nachgiebigen Material ermöglicht eine Dämpfung von Fahrgeräuschen des Fahrwerks bei einer Fortbewegung.

Eine bevorzugte Ausführung der Erfindung besteht darin, dass am Trittelement mindestens zwei nach außen insbesondere nach unten hervorstehende Trittprofilabschnitte ausgebildet sind, die zueinander sowie bezüglich einer Längsachse des Trittelements, insbesondere der Basisschiene angewinkelt angeordnet sind. Solche Trittprofilabschnitte können sowohl Kräfte parallel zur Fahrrichtung als auch quer, insbesondere senkrecht zur Fahrrichtung aufnehmen, wodurch eine verbesserte Spurführung insbesondere bei Kurvenfahrten eines Kettenfahrzeuges erreichbar ist. Insbesondere können die mindestens zwei Trittprofilabschnitte zueinander symmetrisch bezüglich der Laufrichtung der Raupenkette angeordnet sein, um z.B. eine einseitige seitliche Kraftwirkung zu vermeiden.

Des Weiteren ist es bevorzugt, dass das Trittelement an der Bodenkontaktseite von einer zumindest einhüllenden Profillinie begrenzt ist, die entlang einer Längsachse des Trittelements einen nach unten vorgewölbten Verlauf aufweist. Dabei kann das Trittelement in einem mittleren Abschnitt zum Beispiel unterhalb des Spurbügels eine größere Profilhöhe aufweisen als beispielsweise im Bereich von Endabschnitten des Trittelements, insbesondere der Basisschiene. Der erfindungsgemäße Raupensteg kann dadurch in einem Bereich erhöhter Belastung eine verstärkte Eindringtiefe und Bodenhaftung aufweisen als z.B. in einem äußeren Bereich des Raupenstegs, wodurch mit einem Kettenfahrzeug vergleichsweise kleine Kurvenradien befahrbar sind. Eine Raupenkette mit erfindungsgemäßen Raupenstegen bietet dadurch eine verbesserte Manövrierbarkeit für ein Kettenfahrzeug.

Eine weitere bevorzugte Ausführung der Erfindung besteht darin, dass am Raupensteg ein Eindringelement, insbesondere ein Eisdorn angebracht ist. Dadurch ist eine sichere Fortbewegung auf Eis oder einem ähnlich harten, glatten Untergrund möglich.

Vorzugsweise sind am einen Ende des Eindringelements für einen Bodenkontakt mehrere getrennt nebeneinander angeordnete spitze Vorsprünge ausgebildet, die in eine gemeinsame Richtung und insbesondere in im Wesentlichen gleicher Höhe hervorstehen. Wenn die Vorsprünge insbesondere von einer gemeinsamen Basisfläche hervorstehen, kann dadurch die Eindringtiefe des Eindringelements und dessen ökologische Auswirkung z.B. hinsichtlich Erosionsfähigkeit eines Bodens begrenzt sein.

In das Trittelement kann eine Anbringhülse eingegossen sein, die für eine Anbringung des Eindringelements, insbesondere des Eisdorns am Trittelement vorgesehen ist. Dabei ist die Hülse vorzugsweise im Trittelement vertieft angeordnet, wodurch beispielsweise elastisch nachgiebiges Material zumindest teilweise ein angebrachtes Eindringelement umgibt, um z.B. eine Eindringtiefe zu begrenzen. Insbesondere ist es dabei bevorzugt, dass die Anbringhülse im Trittelement derart angeordnet ist, dass die Anbringhülse durch elastisch nachgiebiges Material des Trittelements von der Basisschiene beabstandet ist. Dadurch ist das Eindringelement durch das elastisch nachgiebige Material des Trittelements zwischen der Hülse und der Basisschiene abgefedert, um beispielsweise eine Abnutzung des Eindringelements, insbesondere der Vorsprünge zu verringern.

Die Anbringhülse kann zum Beispiel an einer nach unten gerichteten Öffnung ein Gewinde, insbesondere ein Innengewinde aufweisen, mit dem sich am Trittelement ein Eindringelement beispielsweise anschrauben lässt. Für eine Anbringung des Eindringelements kann die Anbringhülse an einer zur Bodenkontaktseite gerichteten Öffnung außerdem eine Nut eines Bajonettverschlusses aufweisen.

Eine weitere bevorzugte Ausführung der Erfindung besteht darin, dass an der Basisschiene wenigstens ein Verstärkungselement ausgebildet ist, durch das der Spurbügel zumindest teilweise versteift ist. Beispielsweise können an der Basisschiene im Bereich des Spurbügels Federstahlbolzen zum Fahrwerk hin aufragen, die sich mit dem Material des Spurbügels umgießen lassen, um horn- bzw. höckerförmige Erhebungen als Führungselemente auszubilden.

Die Anbringhülse ist vorzugsweise aus einem Metall, insbesondere aus Stahl hergestellt. Des Weiteren kann die Basisschiene aus einem Metall, insbesondere aus einem Stahl hergestellt sein. Außerdem kann die Basisschiene aus zum Beispiel einem Leichtmetall oder zum Beispiel aus Carbon oder zum Beispiel aus einer Kombination verschiedener Materialien hergestellt sein.

Vorzugsweise weist die Basisschiene eine Anbringeinrichtung für ein elastisches Raupenband auf. Beispielsweise kann an der Basisschiene eine Bohrung mit einem Innengewinde zum Anschrauben eines Raupenbandes ausgebildet sein, wobei vorzugsweise mehrere solcher Bohrungen für ein Raupenband bereitgestellt sind. Für eine Raupenkette mit mehreren Raupenbändern ist die Basisschiene vorzugsweise mit mehreren Einbringeinrichtungen für Raupenbänder ausgestattet.

Nachfolgend wird ein Ausführungsbeispiel der Erfindung mit Hilfe der Zeichnungen beschrieben und erläutert.

Es zeigen:
- Figur 1: eine schematische Ansicht einer Bodenkontaktseite einer Raupenkette mit erfindungsgemäßen Raupenstegen,
- Figur 2: eine schematische perspektivische Ansicht einer Bodenkontaktseite eines erfindungsgemäßen Raupenstegs,
- Figur 3: eine schematische perspektivische Ansicht eines erfindungsgemäßen Raupenstegs,
- Figur 4: eine schematische Ansicht einer Längsseite des Raupenstegs,
- Figur 5a: eine schematische Ansicht einer Fahrwerksseite einer Stegschiene,
- Figur 5b: eine schematische Ansicht einer Stirnseite der Stegschiene,
- Figur 5c: eine schematische Ansicht eines Querschnitts der Stegschiene im Bereich einer Sacklochbohrung für einen Spannstift,
- Figur 5d: eine schematische Ansicht eines Querschnitts der Stegschiene an einer zentral durch eine Metallhülse für einen Eisdorn verlaufenden Schnittebene.

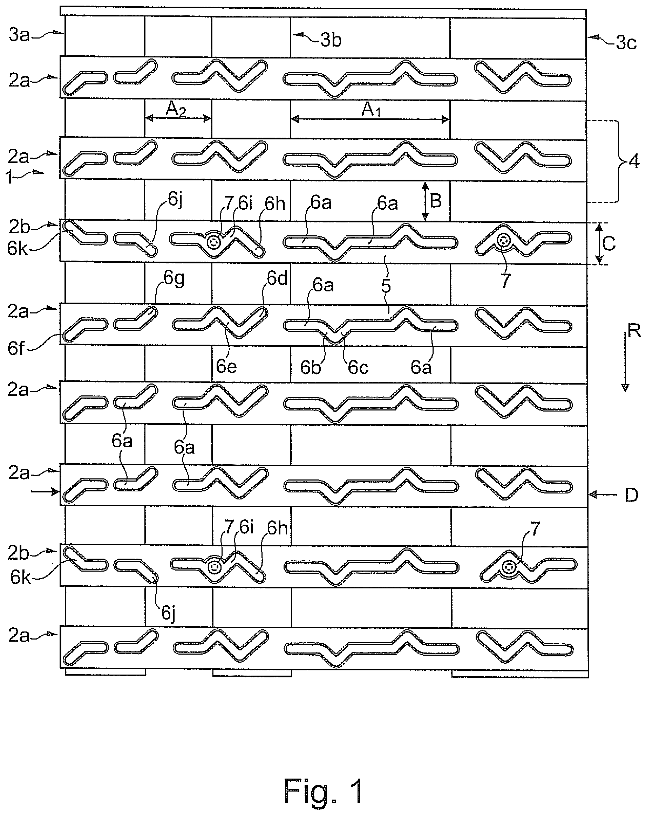

In Figur 1 ist eine Raupenkette 1 gezeigt, an der ein erstes Ausführungsbeispiel 2a und ein zweites Ausführungsbeispiel 2b für erfindungsgemäße Raupenstege angebracht sind. Dabei können in einer Laufrichtung R zwischen jeweils zwei Raupenstegen 2b z.B. jeweils drei Raupenstege 2a hintereinander angeordnet sein.

Die Raupenstege 2a und 2b weisen eine gleiche Breite C auf und sind senkrecht zur Laufrichtung R mit einer gleichen Länge D ausgebildet. Dabei sind die Stege über flexible Bänder 3a, 3b und 3c miteinander verbunden. Die Bänder 3a, 3b und 3c können dabei an den Raupenstegen 2a, 2b angeschraubt sein. Für einen vergleichsweise leichten und verschleißfreien Aufbau sind die elastischen Bänder 3a, 3b und 3c in Abständen voneinander angeordnet, wobei zum Beispiel die Bänder 3a und 3b in einem Abstand A₂ und die Bänder 3b und 3c in einem Abstand A₁ gelegen sind. Der Abstand A₁ zwischen den Bändern 3b und 3c ist dabei auf ein Fahrwerk (nicht gezeigt), insbesondere ein Treibrad (nicht gezeigt) eines Kettenfahrzeugs abgestimmt, das zum Antreiben der Raupenkette 1 mit einer Verzahnung (nicht gezeigt) zwischen die Raupenstege 2a bzw. 2b eingreifen kann.

Der Abstand B, mit dem die Raupenstege 2a bzw. 2b in Laufrichtung voneinander getrennt und nacheinander angebracht sind, ist dabei ebenfalls auf die Verzahnung eines Antriebsrads (nicht gezeigt) abgestimmt.

Die Raupenstege 2a, 2b sind an der Bodenkontaktseite vorzugsweise vollständig vom Material des Trittelements bedeckt. Am Trittelement 5 sind Trittstollen 6a - 6k in Form von stegförmigen Vorsprüngen ausgebildet, die senkrecht von der Bodenkontaktseite abstehen und die für einen zusätzlichen Halt des Trittelementes beim Eingriff in einen befahrenen Untergrund vorgesehen sind. Mehrere Trittstollen 6a können dabei parallel zur Längsrichtung der Raupenstege verlaufen, mit denen eine Traktion für ein Beschleunigen und ein Abbremsen eines Raupenfahrzeugs (nicht gezeigt) verstärkt ist.

Um einem Raupenfahrzeug insbesondere bei Kurvenfahrten einen seitlichen Halt zu geben, sind mehrere Trittstollen 6b, 6c, 6e, 6d, 6f, 6g, 6i, 6j und 6k in einem Winkel von zum Beispiel 45° bezüglich einer Längsachse eines Raupenstegs in verschiedene Richtungen, d.h. in und entgegen einer Laufrichtung R, ausgerichtet. Die angewinkelt angeordneten Profilstollen 6b bis 6k bieten einen verstärkten Widerstand quer zur Fahrrichtung eines Kettenfahrzeugs, wodurch mit den erfindungsgemäßen Raupenstegen 2a, 2b vorteilhaft eine erhöhte Fahrsicherheit erreichbar ist. Für eine verbesserte Manövrierbarkeit können die Trittstollen 6a - 6k in einem mittleren Abschnitt des Raupenstegs 2a, 2b - z.B. im Bereich des Spurbügels 10 - mit einer größeren Höhe vom Trittelement 5 abstehen als an äußeren Endbereichen bezüglich einer Längsachse des Raupenstegs 2a, 2b. Durch eine entsprechend verringerte Höhe der Trittstollen 6a - 6k an den äußeren Endbereichen des Raupenstegs entlang der Längsachse, treten an den Endabschnitten entsprechend verringerte Traktionskräfte bei Kurvenfahrten und Wendemanövern eines Kettenfahrzeugs auf.

Die Raupenstege 2a und 2b unterscheiden sich beispielsweise in der Anordnung der Stollen 6a bis 6k voneinander. Ein weiterer Unterschied zwischen den Raupenstegen 2a und 2b besteht darin, dass an den Raupenstegen 2b zusätzlich Eisdorne 7 einsetzbar sind, mit denen eine Fortbewegung eines Raupenfahrzeugs (nicht gezeigt) auf einem harten und glatten Untergrund, zum Beispiel Eis, verbessert oder überhaupt erst möglich ist.

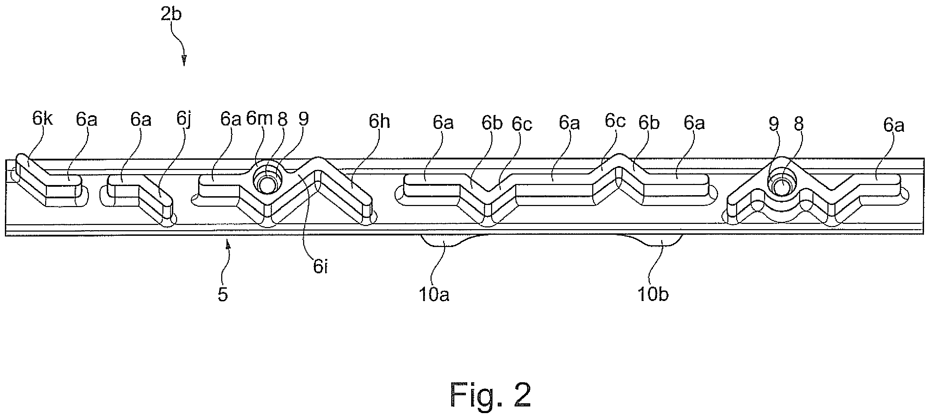

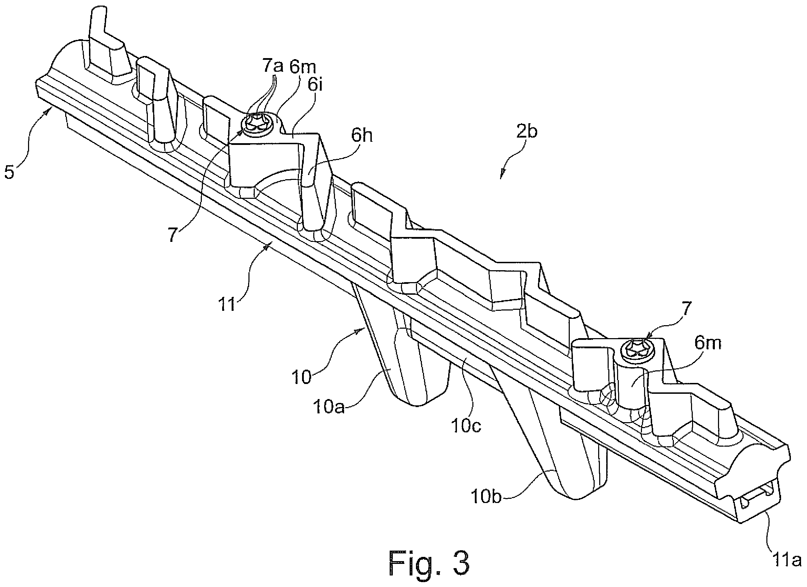

Ein erfindungsgemäßer Raupensteg 2b ist in den Figuren 2 und 3 mit weiteren Einzelheiten gezeigt. In Figur 3 ist erkennbar, dass der Raupensteg 2b eine Stegschiene 11 umfasst, an deren Bodenkontaktseite ein Trittelement 5 ausgebildet ist und das die Bodenkontaktseite der Stegschiene 11 über deren Gesamtlänge in Längsrichtung und über deren Breite C vollständig bedeckt.

An einer Fahrwerkseite 11a der Stegschiene 11 ist ein Spurbügel 10 ausgebildet. Der Spurbügel 10 umfasst zwei separate Spurhöcker 10a und 10b, die über einen Mittelabschnitt 10c des Spurbügels miteinander verbunden sind. Die Spurhöcker 10a und 10b ragen dabei an der Fahrwerkseite 11a der Stegschiene 11 empor und geben eine Führungsspuran der Raupenkette 1 für ein Fahrwerk (nicht gezeigt) eines Kettenfahrzeugs (nichtgezeigt) vor. Dadurch lassen sich seitliche Bewegungen von Fahrwerksteilen (nicht gezeigt) wie z.B. einem Antriebsrad und z.B. einer Fahrwerksrolle, längs der Raupenstege begrenzen, wenn die Fahrwerksteile beipielsweise zwischen den Spurhöckern 10a und 10b eingreifen und sich auf dem Mittelabschnitt 10c abstützen.

Das Trittelement 5 und der Spurbügel 10 sind dabei mit einer durchgehenden Materialverbindung ausgebildet, wobei das Trittelement und der Spurbügel beispielsweise aus einem einzigen Material, insbesondere durch Gießen, zum Beispiel Spritzgießen oder durch Polymerisation oder durch Vulkanisation hergestellt sein können.

Durch die insbesondere einstückige Verbindung des Trittelements 5 mit dem Spurbügel 10 sind seitwärts gerichtete Kräften, die parallel zur Längsachse der Stegschiene 11 wirken, vorteilhaft direkt von den Spurführungselementen des Spurbügels 10 auf das Trittelement 5 und insbesondere die Trittstollen 6a - 6k übertragbar. Auf diese Weise lassen sich zum Beispiel Verschiebungen des Spurbügels 10 und des Trittelements 5 zueinander und bezüglich der Stegschiene 11 verringern oder gar vermeiden, die an bisher verwendeten, dem Stand der Technik entsprechenden Raupenstegen bei fortschreitendem Verschleiß zu einem zunehmenden Bewegungsspiel zwischen Spurführungselementen für das Fahrwerk und dem Trittelement 5 führen können.

Beim Einsatz unter winterlichen Bedingungen mit vergleichsweise tiefen Temperaturen können sich die Eigenschaften des Untergrunds insbesondere dessen Nachgiebigkeit vergleichsweise stark ändern. Daher bietet das Trittelement 5 neben den Profilstollen 6a bis 6k zusätzlich Stecköffnungen 8, in die sich bolzenförmige Eisdorne 7 aus einem harten Material, insbesondere Stahl, einstecken lassen. Zur Befestigung der Eisdorne 7 in den Stecköffnungen 8 sind an den Stecköffnungen 8 Metallhülsen 9 eingelassen, in die sich ein Eisdorn 7 für eine Befestigung z.B. einschrauben lässt. Im Bereich der Stecköffnungen 8 sind die Profilstollen vorzugsweise durch Wandabschnitte 6m verstärkt, wodurch die Metallhülsen 9 und ein Großteil einer Oberfläche eines Eisdorns 7 durch ein flexibleres Material des Trittelements 5 zu umschlossen ist. Dies bietet den Vorteil, dass sich ein Eisdorn 7 bei einem Bodenkontakt der Raupenschiene 2b bezüglich seiner Lage an den Untergrund anpassen kann. Dadurch ist ein verbessertes Eingreifen des Eisdorns 7 in einen harten insbesondere gefrorenen Untergrund möglich.

Vorzugsweise sind an einer Spitze der Eisdorne 7 mehrere Zacken 7a ausgebildet, die an der Spitze des Eisdorns in etwa gleicher Höhe einzeln hervorstehen. Dies bietet den Vorteil, dass sich ein Eindringen eines Eisdorns in einen Untergrund begrenzen lässt, um Schäden an einem ökologisch empfindlichen Untergrund einzuschränken.

Die Stegschiene 11 ist vorzugsweise in das Trittelement 5 und in den Spurbügel 10 eingegossen, um durch entsprechende Haftkräfte einen Verschleiß am Raupensteg 2b durch Relativbewegungen der Stegschiene zum Trittelement und zu den Spurbügeln zu vermeiden.

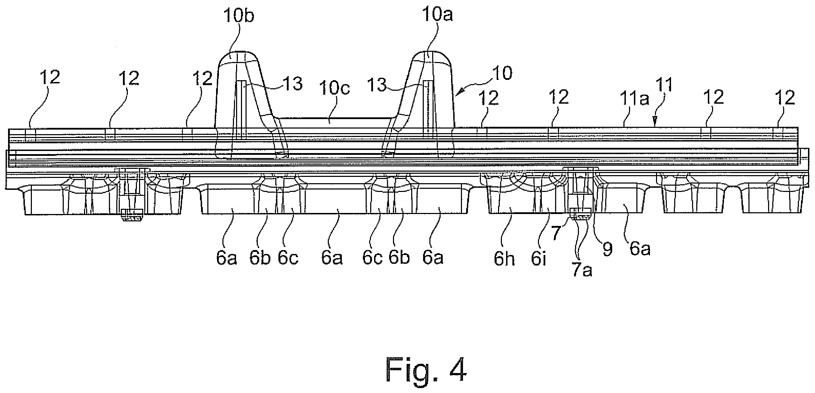

In Figur 4 ist die Stegschiene 2b halbtransparent dargestellt, wodurch auch verdeckte Konturen erkennbar sind. An der Oberseite 11a der Stegschiene 11 sind Spannstifte 13 eingesteckt, die von den Spurhöckern 10a und 10b des Spurbügels 10 umhüllt sind. Dadurch ergibt sich eine verbesserte Kraftübertragung von Querkräften senkrecht zur Lauf- bzw. Fahrrichtung eines Kettenfahrzeugs (nicht gezeigt).

Des Weiteren sind an der Oberseite 11a der Stegschiene 11 mehrere Bohrungen 12 ausgebildet, die zur Anbringung von Laufbändern 3a, 3b und 3c zum Beispiel durch Anschrauben vorgesehen sind. Damit ist eine vergleichsweise einfache und schnelle Montage einer Raupenkette 1 mit den erfindungsgemäßen Raupenstegen 2a, 2b möglich.

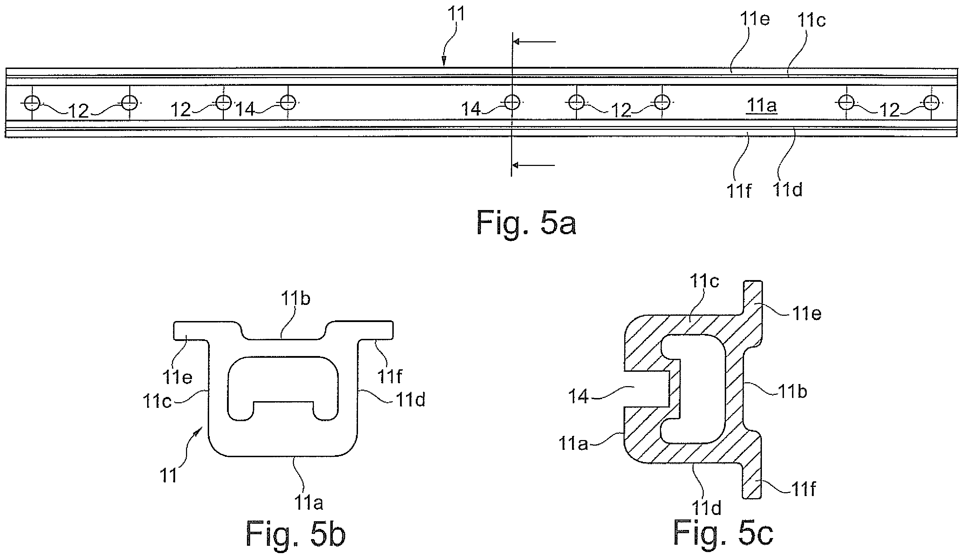

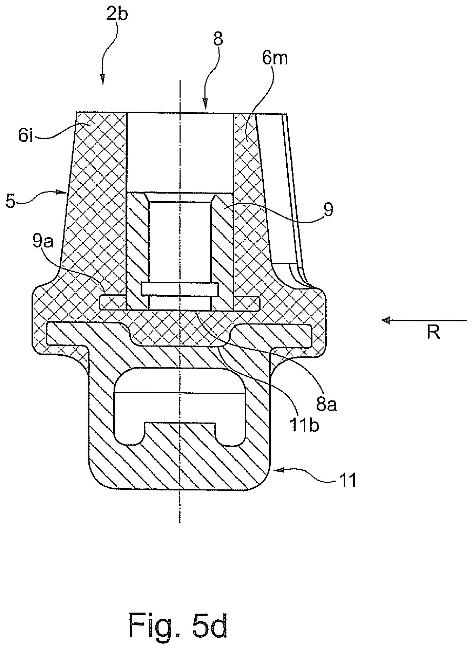

In den Figuren 5a, 5b, 5c und 5d sind weitere Einzelheiten des Raupenstegs 2a, 2b und insbesondere der Stegschiene 11 gezeigt. In den Figuren 5b und 5c ist erkennbar, dass die Stegschiene 11 als eine im Wesentlichen rechteckige, rohrförmige Metallprofilschiene ausgebildet ist. Dabei sind die Bodenkontaktseite 11a und die Fahrwerkseite 11b in Laufrichtung R von der Vorderseite 11c und entgegen der Laufrichtung R von der Rückseite 11d begrenzt. An der Bodenkontaktseite 11b weist das Querschnittsprofil der Stegschiene 11 an der Vorderseite 11c einen in Laufrichtung R vorspringenden stegförmigen Vorsprung 11e auf. An der Rückseite 11d ist an der Bodenkontaktseite 11b ein weiterer stegförmiger Vorsprung 11f ausgebildet, der dem stegförmigen Vorsprung 11e entgegengerichtet ist. Die stegförmigen Vorsprünge 11e und 11f an der Bodenkontaktseite 11b verbreitern eine Auflagefläche des Raupenstegs 2a, 2b und erlauben eine entsprechend verbreiterte Ausführung des Trittelements 5, wodurch beispielsweise eine Neigung zum Umknicken eines Raupenstegs 2a, 2b auf unebenen Untergrund verringert ist.

Eine Materialstärke des Querschnitts der Stegschiene 11 ist im Bereich der Fahrwerkseite 11a verstärkt. Dies bietet den Vorteil einer vergleichsweise stabilen Verankerung der Spannstifte 13 in den Befestigungsbohrungen 14 (Fig. 5c), an denen die Spannstifte 13 beispielsweise eingeschlagen sein können. Außerdem lassen sich entsprechend tiefe Bohrungen 12 z.B. für Innengewinde an der verstärkten Fahrwerksseite 11a ausbilden. Durch die Tiefe der Bohrungen 12 ist eine vergrößerte Kontaktfläche für Schraubverbindungen bereitgestellt, mit der sich die Laufbänder 3a bis 3c vorteilhaft zuverlässig befestigen lassen.

In Fig. 5d ist ein Querschnitt des Raupenstegs 2b im Bereich einer der Vertiefungen 8 im Trittelement 5 mit der Metallhülse 9 gezeigt, die zur Anbringung des Eisdorns 7 vorgesehen ist. Die Vertiefung 8 ist im elastischen Material des Trittelements 5 im Bereich des Trittstollens 6i und des Wandabschnitts 6m ausgebildet. Die Vertiefung 8 reicht bis zu einem Boden 8a, von dem aus die im wesentlichen hohlzylinderförmige Metallhülse 9 bis knapp über die eine halbe Höhe der Vertiefung reicht. Dabei weist die Metallhülse 9 am Boden 8a eine Krempe 9a auf, wodurch an der Metallhülse eine verbreiterte Stützfläche im Bereich des Bodens 8a ausgebildet ist. Der Boden 8a ist dabei aus dem elastischen Material des Trittelements 5 ausgebildet, mit dem der Bereich zwischen dem Boden 8a der Vertiefung 8 und der Bodenkontaktseite 11b der Stegschiene 11 ausgefüllt ist. Dies bietet den Vorteil, dass die Metallhülse 9 und ein darin angebrachter Eisdorn 7 durch das Material des Trittelements 5 elastisch gegenüber der Stegschiene 11 gelagert ist.

### Bezugszeichenliste:

- 1: Raupenkette
- 2a: Raupensteg
- 2b: Raupensteg mit Steckaufnahme, Stecköffnung
- 3a: Laufband
- 3b: Laufband
- 3c: Laufband
- 4: Kettengliedabschnitt
- 5: Trittelement
- 6a - 6k: Trittstollen
- 6m: Wandabschnitt
- 7: Eisdorn
- 7a: Zacke
- 8: Vertiefung, Loch
- 8a: Boden
- 9: Anbringhülse, Metallhülse, Eisdornbüchse, Stahlbüchse
- 9a: Krempe
- 10: Spurbügel
- 10a: Spurhöcker
- 10b: Spurhöcker
- 10c: Mittelabschnitt
- 11: Stegschiene
- 11a: Fahrwerksseite
- 11b: Bodenkontaktseite
- 11c: Vorderseite
- 11d: Rückseite
- 11e: Vorsprung
- 11f: Vorsprung
- 12: Bohrung (für Anbringung eines Laufbands)
- 13: Spannstift
- 14: Bohrung (zum Einschlagen eines Spannstifts)

## Patentansprüche

1. Raupensteg (2a, 2b) für eine Raupenkette (1) eines Kettenfahrzeugs, insbesondere eines Schneefahrzeugs, wobei der Raupensteg (2a, 2b) eine Basisschiene (11), die lösbar an der Raupenkette (1) anbringbar ist, einen Spurbügel (10), der zur Führung der Raupenkette (1) an einem Fahrwerk des Kettenfahrzeugs vorgesehen ist, und ein Trittelement (5), das zur Anordnung an einer Bodenkontaktseite der Raupenkette (1) und zum Eingriff in einen Fahruntergrund vorgesehen ist, umfasst, dass der Spurbügel (10) und das Trittelement (5) einstückig ausgebildet sind, **dadurch gekennzeichnet, dass** das Trittelement (5) über einen Großteil der Länge der Basisschiene und in Längsrichtung der Basisschiene (11) erstreckt ist, dass der Spurbügel (10) und das Trittelement (5) aus einem elastisch nachgiebigen Material, insbesondere einem gummihaltigen Material hergestellt sind.

2. Raupensteg (2a, 2b) nach Anspruch 1, **dadurch gekennzeichnet, dass** der Spurbügel (10) und das Trittelement (5) an der Basisschiene (11) angegossen sind.

3. Raupensteg (2a, 2b) nach einem der vorgenannten Ansprüche, **dadurch gekennzeichnet, dass** der Spurbügel (10) und das Trittelement (5) durch Vulkanisieren mit der Basisschiene (11) verbunden sind.

4. Raupensteg (2a, 2b) nach einem der vorgenannten Ansprüche, **dadurch gekennzeichnet, dass** am Trittelement (5) mindestens zwei nach außen, insbesondere nach unten hervorstehende Trittprofilabschnitte (6b - 6k) ausgebildet sind, die zueinander sowie bezüglich einer Längsachse des Trittelements (5), insbesondere der Basisschiene (11) angewinkelt angeordnet sind.

5. Raupensteg (2a, 2b) nach einem der vorgenannten Ansprüche, **dadurch gekennzeichnet, dass** das Trittelement (5) an der Bodenkontaktseite von einer zumindest einhüllenden Profillinie begrenzt ist, die entlang einer Längsachse des Trittelements (5) einen nach unten vorgewölbten Verlauf aufweist.

6. Raupensteg (2a, 2b) nach einem der vorgenannten Ansprüche, **dadurch gekennzeichnet, dass** am Raupensteg (2a, 2b) ein Eindringelement insbesondere ein Eisdorn (7) angebracht ist.

7. Raupensteg (2a, 2b) nach Anspruch 6, **dadurch gekennzeichnet, dass** an einem Ende des Eindringelements (7) für einen Bodenkontakt mehrere getrennt nebeneinander angeordnete spitze Vorsprünge (7a) ausgebildet sind, die in eine gemeinsame Richtung und insbesondere in im Wesentlichen gleicher Höhe hervorstehen.

8. Raupensteg (2a, 2b) nach Anspruch 6 oder 7, **dadurch gekennzeichnet, dass** in das Trittelement (5) eine Anbringhülse (9) eingegossen ist, die für eine Anbringung des Eindringelements, insbesondere des Eisdorns (7) am Trittelement (5) vorgesehen ist.

9. Raupensteg (2a, 2b) nach Anspruch 8, **dadurch gekennzeichnet, dass** die Anbringhülse (9) im Trittelement (5) derart angeordnet ist, dass die Anbringhülse (9) durch elastisch nachgiebiges Material des Trittelements (5) von der Basisschiene (11) beabstandet ist.

10. Raupensteg (2a, 2b) nach Anspruch 8 oder 9, **dadurch gekennzeichnet, dass** die Anbringhülse (9) an einer nach außen gerichteten Öffnung ein Innengewinde aufweist.

11. Raupensteg (2a, 2b) nach einem der vorgenannten Ansprüche 8 bis 10, **dadurch gekennzeichnet, dass** die Anbringhülse (9) an einer nach außen gerichteten Öffnung eine Nut eines Bajonettverschlusses aufweist.

12. Raupensteg (2a, 2b) nach einem der vorgenannten Ansprüche, **dadurch gekennzeichnet, dass** an der Basisschiene (11) wenigstens ein Verstärkungselement (13) ausgebildet sind, durch das der Spurbügel (10) zumindest teilweise versteift ist.

13. Raupensteg (2a, 2b) nach einem der vorgenannten Ansprüche 8 bis 11, **dadurch gekennzeichnet, dass** die Anbringhülse (9) aus einem Metall, insbesondere aus einem Stahl hergestellt ist.

14. Raupensteg (2a, 2b) nach einem der vorgenannten Ansprüche, **dadurch gekennzeichnet, dass** die Basisschiene (11) aus einem Metall, insbesondere aus einem Stahl hergestellt ist.

15. Raupensteg (2a, 2b) nach einem der vorgenannten Ansprüche, **dadurch gekennzeichnet, dass** die Basisschiene (11) eine Anbringeinrichtung (12) für ein Raupenband (3a, 3b, 3c) aufweist.

## Claims

1. Crawler bar (2a, 2b) for a crawler chain (1) of a tracked vehicle, in particular a snow vehicle, wherein the crawler bar (2a, 2b) comprises a base rail (11) which can be attached detachably to the crawler chain (1), a track bracket (10) which is provided for guiding the crawler chain (1) on a chassis of the tracked vehicle, and a tread element (5) which is provided for arranging on a base contact side of the crawler chain (1) and for engaging in an underlying driving surface, wherein the track bracket (10) and the tread element (5) are designed in one piece, **characterised in that** the tread element (5) is extended over a large part of the length of the base rail and in longitudinal direction of the base rail (11), **in that** the track bracket (10) and the tread element (5) are made from an elastically flexible material, in particular a material containing rubber.

2. Crawler bar (2a, 2b) according to claim 1, **characterised in that** the track bracket (10) and the tread element (5) are cast onto the base rail (11).

3. Crawler bar (2a, 2b) according to any of the preceding claims, **characterised in that** the track bracket (10) and the tread element (5) are connected to the base rail by vulcanisation.

4. Crawler bar (2a, 2b) according to any of the preceding claims, **characterised in that** on the tread element (5) there are at least two tread profile portions (6b - 6k), which protrude outwardly in particular downwards, which are arranged at an angle to one other and with respect to a longitudinal axis of the tread element (5), in particular the base rail (11).

5. Crawler bar (2a, 2b) according to any of the preceding claims, **characterised in that** the tread element (5) is delimited on the ground contact side by an at least enveloping profile line which has a downwardly precurved profile along a longitudinal axis of the tread element (5).

6. Crawler bar (2a, 2b) according to any of the preceding claims, **characterised in that** a penetrating element, in particular an ice spike (7), is attached to the crawler bar (2a, 2b).

7. Crawler bar (2a, 2b) according to claim 6, **characterised in that** at one end of the penetration element (7) for a base contact a plurality of pointed projections (7a) are formed arranged separately next to one another, which protrude in a common direction and in particular at essentially the same height.

8. Crawler bar (2a, 2b) according to claim 6 or 7, **characterised in that** an attachment sleeve (9) is cast into the tread element (5), which attachment sleeve is provided for attaching the penetrating element, in particular the ice spike (7), to the tread element (5).

9. Crawler bar (2a, 2b) according to claim 8, **characterised in that** the attachment sleeve (9) is arranged in the tread element (5) in such a manner that the attachment sleeve (9) is spaced apart from the base rail (11) by an elastically flexible material of the tread element (5).

10. Crawler bar (2a, 2b) according to claim 8 or 9, **characterised in that** the attachment sleeve (9) has an internal thread on an outwardly directed opening.

11. Crawler bar (2a, 2b) according to any of the preceding claims 8 to 10, **characterised in that** the attachment sleeve (9) has a groove of a bayonet catch on an outwardly directed opening.

12. Crawler bar (2a, 2b) according to any of the preceding claims, **characterised in that** on the base rail (11) at least one reinforcement element (13) is formed, by means of which the track bracket (10) is at least partly reinforced.

13. Crawler bar (2a, 2b) according to any of the preceding claims 8 to 11, **characterised in that** the attachment sleeve (9) is made from a metal, in particular a steel.

14. Crawler bar (2a, 2b) according to any of the preceding claims, **characterised in that** the base rail (11) is made from a metal, in particular a steel.

15. Crawler bar (2a, 2b) according to any of the preceding claim, **characterised in that** the base rail (11) comprises an attachment device (12) for a crawler belt (3a, 3b, 3c).

## Revendications

1. Barrette de chenille (2a, 2b) pour une chenille (1) d'un véhicule à chenilles, en particulier d'un véhicule à neige, la barrette de chenilles (2a, 2b) comportant un rail de base (11) pouvant être fixée de manière détachable sur la chenille (1), un cintre de guidage (10) prévu pour guider la chenille (1) sur un train de roulement du véhicule à chenilles, et un élément de marche (5) prévu pour être disposé sur un côté de contact au sol de la chenille (1) et pour s'agripper dans une surface de roulement, le cintre de guidage (10) et l'élément de marche (5) étant d'une seule pièce, **caractérisée en ce que** l'élément de marche (5) s'étend sur une grande partie de la longueur du rail de base et dans la direction longitudinale du rail de base (11), **en ce que** le cintre de guidage (10) et l'élément de marche (5) sont fabriqués en un matériau élastiquement flexible, en particulier un matériau contenant un caoutchouc.

2. Barrette de chenille (2a, 2b) selon la revendication 1, **caractérisée en ce que** le cintre de guidage (10) et l'élément de marche (5) sont coulés sur le rail de base (11).

3. Barrette de chenille (2a, 2b) selon l'une des revendications précédentes, **caractérisée en ce que** le cintre de guidage (10) et l'élément de marche (5) sont reliés au rail de base (11) par vulcanisation.

4. Barrette de chenille (2a, 2b) selon l'une des revendications précédentes, **caractérisée en ce qu'**au moins deux sections de profilé de marche (6b - 6k) saillant vers l'extérieur, en particulier vers le bas, sont formées sur l'élément de marche (5) et sont disposées en formant un angle entre eux et par rapport à un axe longitudinal de l'élément de marche (5), en particulier par rapport au rail de base (11).

5. Barrette de chenille (2a, 2b) selon l'une des revendications précédentes, **caractérisée en ce que** l'élément de marche (5) est délimité sur le côté de contact au sol par une ligne de profil au moins enveloppante qui présente une forme bombée vers le bas le long d'un axe longitudinal de l'élément de marche (5).

6. Barrette de chenille (2a, 2b) selon l'une des revendications précédentes, **caractérisée en ce qu'**un élément pénétrant est fixé sur la barrette de chenille (2a, 2b), en particulier un crampon à glace (7).

7. Barrette de chenille (2a, 2b) selon la revendication 6, **caractérisée en ce qu'**à une extrémité de l'élément pénétrant (7) sont formées une pluralité de saillies pointues (7a) pour un contact au sol, lesquelles sont disposées séparément côte à côte et saillent dans une direction commune et en particulier à sensiblement la même hauteur.

8. Barrette de chenille (2a, 2b) selon la revendication 6 ou 7, **caractérisée en ce qu'**une douille de fixation (9) est intégrée par coulage dans l'élément de marche (5), laquelle est prévue pour fixer sur l'élément de marche (5) l'élément pénétrant, en particulier le crampon à glace (7).

9. Barrette de chenille (2a, 2b) selon la revendication 8, **caractérisée en ce que** la douille de fixation (9) est disposée dans l'élément de marche (5) de telle sorte que la douille de fixation (9) soit espacée du rail de base (11) par du matériau élastiquement flexible de l'élément de marche (5).

10. Barrette de chenille (2a, 2b) selon la revendication 8 ou 9, **caractérisée en ce que** la douille de fixation (9) présente un filetage intérieur au niveau d'une ouverture dirigée vers l'extérieur.

11. Barrette de chenille (2a, 2b) selon l'une des revendications 8 à 10 précédentes, **caractérisée en ce que** la douille de fixation (9) présente une rainure d'une fermeture à baïonnette au niveau d'une ouverture dirigée vers l'extérieur.

12. Barrette de chenille (2a, 2b) selon l'une des revendications précédentes, **caractérisée en ce qu'**au moins un élément de renfort (13) est formé sur le rail de base (11), au moyen duquel le cintre de guidage (10) est au moins partiellement renforcé.

13. Barrette de chenille (2a, 2b) selon l'une des revendications 8 à 11 précédentes, **caractérisée en ce que** la douille de fixation (9) est réalisée dans un métal, en particulier dans un acier.

14. Barrette de chenille (2a, 2b) selon l'une des revendications précédentes, **caractérisée en ce que** le rail de base (11) est réalisé dans un métal, en particulier dans un acier.

15. Barrette de chenille (2a, 2b) selon l'une des revendications précédentes, **caractérisée en ce que** le rail de base (11) comprend un dispositif de fixation (12) pour une courroie de chenille (3a, 3b, 3c).
